# EUROPEAN PATENT APPLICATION

(11) **EP 0 721 165 A2**
(43) Date of publication of application: **10.07.1996**
(21) Application number: 96300061.7
(22) Date of filing: 03.01.1996
(51) Int. Cl.: G06F 17/21, G06F 17/22, G06F 17/30

(54) **System and method for data format modification and translator construction**

(30) Priority: 03.01.1995 US 367553
(71) Applicant: XEROX CORPORATION, Rochester New York 14644 (US)
(72) Inventor: Feng, An, Xerox Corporation, Palo Alto CA 94304 (US)
(74) Representative: Johnson, Reginald George

(57) **Abstract**

A system and method for data format modification and translator construction. Traditionally, data format modification and translator construction are performed as separate tasks. In the present invention, a data format is "modified" using a set of primitive operators. The execution of the primitive operators on the data format causes a new data format to be created along with a translator for translating instances of documents in the original data format to instances of documents in the new data format.

## Description

The present invention relates in general to the field of information processing, and more particularly to a system and method for data format modification and translator construction.

It is not unusual that a data format, e.g. a database schema or document format, will become obsolete or in need of change in order to accommodate some new desired function. This is a common occurrence for documents defined in the Standard Generalized Markup Language (SGML) format. SGML is an International Standards Organization standard (ISO 8879) that specifies a representation language for document types and document instances. One important feature of SGML is that users can define Document Type Definitions (DTDs) enabling information within SGML documents to be retrieved and reused in the future. Each DTD defines a set of generic identifiers (Gl's). For each GI, its potential set of components is specified by a regular expression (called content model) and optionally some included or excluded GI's. Also, a set of attributes can be associated with each GI. In SGML, a document instance is expressed as a sequence of character strings and markups, which indicate the structure of the document. A concise description of SGML can be found in the publication entitled "The SGML Handbook", Charles F. Goldfarb, 1990 available from Oxford University Press.

Figures 1 and 2 illustrate a DTD D0 and its document instance d0. Referring to Figure 1, the DTD D0 declares five Gl's: doc 101, fn 102, sec 103, title 104, and para 105. The content model for GI doc 101 is (sec) 106, implying that each doc element contains exactly one sec element. For GI sec 103, its content model (title, para*, sec*) 107 indicates that each sec element consists of a title and optionally several paragraphs and subsections. As indicated by content model (#PCDATA) 108, each title, para, and fn is a sequence of character data. Note that #PCDATA is a reserved SGML keyword indicating parsed character data that is checked by the SGML parser for any embedded tag or entity references. D0 also declares fn to be an included GI for doc through + (fn) 109, and an excluded GI for title through -(fn) 110. Such a declaration enables fn-elements to appear at any place in a D0 document instance provided that each fn-element is not a component of some title-element.

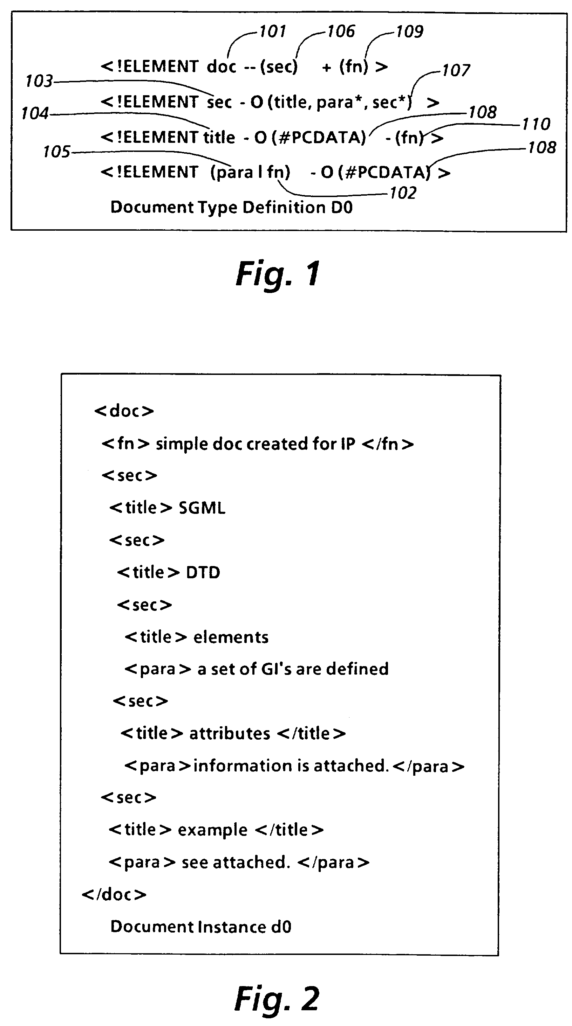

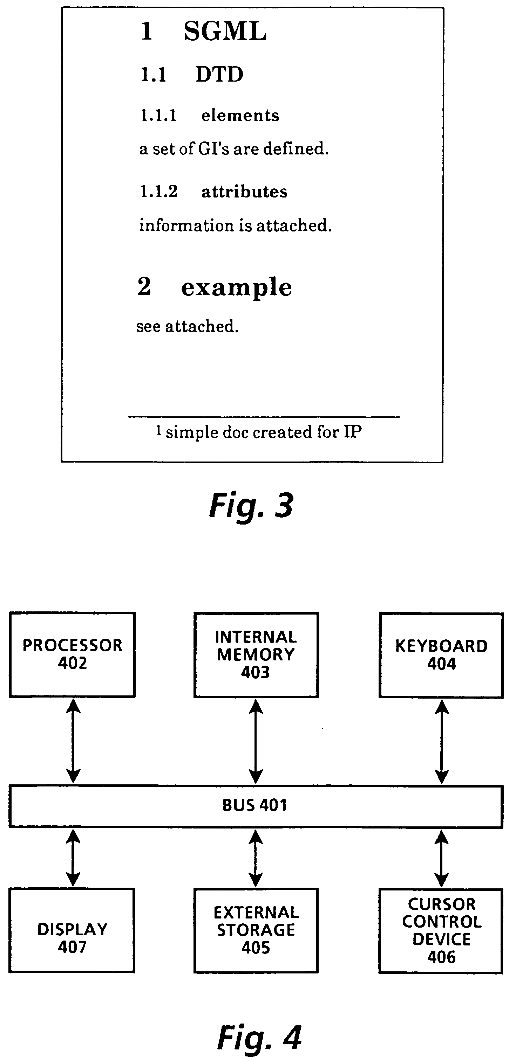

In the instance d0 of Figure 2 , the markups <X> and </X> indicate the start and end of an element X, respectively. Although not required by SGML the hierarchical structure of elements is shown for clarity through space indentions. Figure 3 illustrates how the instance d0 would appear when formatted and printed.

For various reasons, SGML DTDs evolve (such as, adding new GI's or arranging GI's in a different order) or otherwise need to be changed (to permit exchange of SGML document information). To keep document instances consistent with their DTDs, translators to translate instances of an old DTD into instances of the new DTD are constructed. Thus, there are two tasks: DTD evolution (editing) and document instance translator construction.

Typically, the DTD editing and document instance translator construction are treated as separate tasks. First, a user modifies the existing DTD D to a new DTD D'. Usually, it is carried out by using a DTD editor (e.g., Near&Far available from MicroStar Software DTD of Canada) or a general textual editor (e.g., GNU-Emacs). Then, the user creates a translator for translating DTD D document instances to DTD D' document instances. Various tools are commercially available for translator construction (e.g., Omnimark (TM) available from Exoterica Corporation of Canada) .

There are two major drawbacks to such an approach. First, it is very time consuming. Typically, an engineer spends several weeks or months for DTD evolution and translator construction. Second, it is very difficult to guarantee that the document instance translator always produces correct instances of the target DTD. A system for data format modification and translator construction is disclosed. In the present invention, a data format is "modified" using a set of primitive operators. The execution of the primitive operators on the data format causes a new data format to be created along with a translator for translating instances in the original data format to instances in the new data format. The present invention is typically implemented on a computer based system.

The present invention has a preferred embodiment for use in translating document instances defined according to the Standard Generalized Markup Language (SGML). Documents in SGML are defined in structures termed Data Type Definitions (DTDs). Accordingly, a user of the preferred embodiment of the present invention need only describe the changes required to the DTD and new DTDs and an instance translator is generated. The changes to the DTD are described using a set of primitive DTD operators. When a DTD needs to be changed, a user need only choose a sequence of these predefined operators and their arguments. Since each of these primitive operators is well defined, the generated translator produces correct instances of the target DTD. Each primitive DTD operator (together with its arguments) defines both a mapping from input DTDs to an output DTD, and a mapping from instances of the input DTD to instances of the output DTD. Through experimentation it has been determined that most DTD evolution tasks can be specified in terms of the aforementioned primitive DTD operators.

The present invention includes operations to insert new element types or attributes, remove existing element types and attributes, group a regular expression by a given element type,substitute an element type by its content model , change the name of element types or attributes, cut an argument or its occurrence from content model, insert an argument into the content model, move an argument to the front (or end) of a content model, substitute #PCDATA by a regular expression and change the order of an element list. For each operator, the first argument (called the pattern argument ) defines which parts of DTDs and instances will be affected. The remaining arguments specifies how those affected parts will be modified.

The present invention will be described further, by way of examples, with reference to the accompanying drawings, in which:-
Figure 1 is an example of Document Type Definition (DTD) for a document in the Standard Generalized Markup Language (SGML);
Figure 2 is a document instance of the DTD of Figure 1;
Figure 3 illustrates the document instance of Figure 2 as it would appear when formatted and printed;
Figure 4 is a block diagram of a computer based system as may be utilized by the currently preferred embodiment of the present invention;
Figure 5 is a block diagram illustrating the overall operation of the currently preferred embodiment of the present invention to perform DTD evolution and instance translation;
Figure 6 is an illustration exemplifying the effects of an Insert operator and a Remove operator on a DTD and a document instance as may be performed in the currently preferred embodiment of the present invention;
Figure 7 is an illustration exemplifying the effects of a Group operator on a DTD and a document instance as may be performed in the currently preferred embodiment of the present invention;
Figure 8 is an illustration exemplifying the effects of a Recursive Ungroup operator on a DTD and a document instance as may be performed in the currently preferred embodiment of the present invention;
Figure 9 is an illustration exemplifying the effects of a Rename operator on a DTD and a document instance as may be performed in the currently preferred embodiment of the present invention;
Figure 10 is an illustration exemplifying the effects of a PasteBefore operator and a Cut operator on a DTD and a document instance as may be performed in the currently preferred embodiment of the present invention;
Figure 11 is an illustration exemplifying the effects of a MoveToEnd operator and a MoveToFront operator on a DTD and a document instance as may be performed in the currently preferred embodiment of the present invention;
Figure 12 is an illustration exemplifying the effects of a SplitPCDATA operator on a DTD and a document instance as may be performed in the currently preferred embodiment of the present invention;
Figure 13 is an illustration exemplifying the effects of a Reorder operator on a DTD and a document instance as may be performed in the currently preferred embodiment of the present invention;
Figure 14 illustrates a graphical user interface for using the currently preferred embodiment of the present invention;
Figure 15 illustrates a detailed example of the operation of the currently preferred embodiment of the present invention; and
Figure 16 illustrates the construction of an instance translator based on the example of Figure 15 in the currently preferred embodiment of the present invention.

A system for data format modification and translator construction is disclosed. In the following description numerous specific details are set forth, such as the composition of a Data Type Definition (DTD) in the Standard Generalized Markup Language (SGML), in order to provide a thorough understanding of the present invention. It would be apparent, however, to one skilled in the art to practice the invention without such specific details. In other instances, specific implementation details, such as the creation of an original DTD, have not been shown in detail in order not to unnecessarily obscure the present invention.

The currently preferred embodiment of the present invention is implemented on a computer based system and is used for the construction of translators for SGML DTDs. However, the concepts could also be used to build translators for other document formats (e.g. for documents in a format for a first word processor to the format for a second word processor). Moreover, the basic concepts of the present invention could be used for other applications such as the modification of database schema and the translation of database instances or for computer language translation in the translation of grammars.

The currently preferred embodiment of the present invention is implemented as a program written in the C + + programming language for use on a Unix (TM) based Computer System (Unix is a trademark of American Telephone & Telegraph). However, it would be apparent to have used alternative programming languages for use on other computer based systems.

### Overview of a Computer Based System In the Currently Preferred Embodiment of the Present Invention

The computer based system on which the currently preferred embodiment of the present invention may be implemented is described with reference to Figure 4. Referring to Figure 4, the computer based system is comprised of a plurality of components coupled via a bus 401. The bus 401 may consist of a plurality of parallel buses (e.g. address, data and status buses) as well as a hierarchy of buses (e.g. a processor bus, a local bus and an I/O bus). In any event, the computer system is further comprised of a processor 402 for executing instructions provided via bus 401 from Internal memory 403 (note that the Internal memory 403 is typically a combination of Random Access and Read Only Memories). The processor 402 will be used to perform the various primitive operations for DTD evolution and translator construction as described below. Instructions for performing such operations are retrieved from Internal memory 403. The processor 402 and Internal memory 403 may be discrete components or a single integrated device such as an Application Specification Integrated Circuit (ASIC) chip.

Also coupled to the bus 401 are a keyboard 404 for entering alphanumeric input, external storage 405 for storing data and instance translators, a cursor control device 406 for manipulating a cursor, and a display 407 for displaying visual output. The keyboard 404 would typically be a standard QWERTY keyboard but may also be telephone like keypad. The external storage 405 may be fixed or removable magnetic or optical disk drive. The cursor control device 406, e.g. a mouse or trackball, will typically have a button or switch associated with it to which the performance of certain functions can be programmed.

### Overview of the Currently Preferred Embodiment of the Present Invention

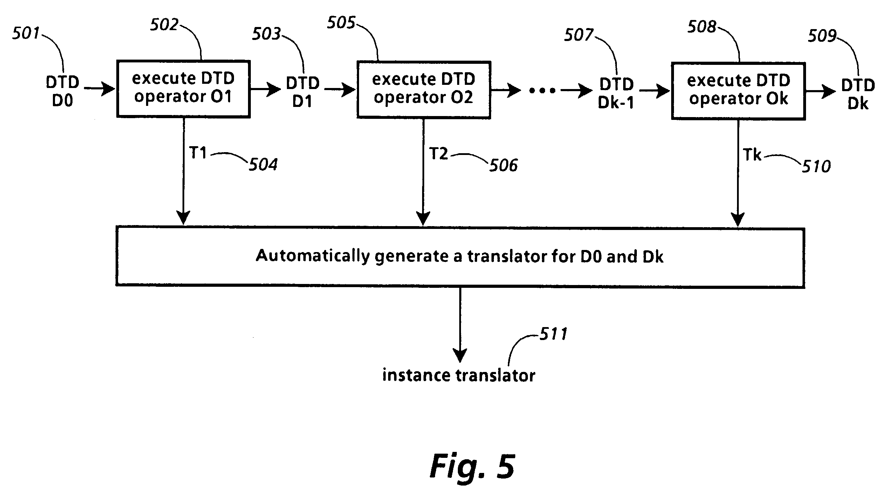

An important attribute of the present invention is that it enables users to focus their efforts on DTD evolution. In the present invention a user defines a sequence of DTD operators to modify DTDs in an incremental manner. Invisible to users, the system automatically generates an instance translator from this sequence of operators. Figure 5 illustrates this process for a sequence of k operations. Referring to Figure 5, a DTD D0 501 is modified by DTD Operator O1 502 and generates DTD D1 503 and translator information T1 504. The DTD D1 503 is used as input to DTD operation O2 505 while the translator information T2 506 is saved for subsequent translator generation. This process continues for each operator in the sequence until DTD Dk-1 507 is input to DTD Ok operator 508. The final DTD Dk 509 is generated along with translator information Tk 510. At this point the DTD Dk 509 is the desired or "evolved" DTD. The generated translator information T1 to Tk is then used to construct instance translator 511.

In the currently preferred embodiment, the translator information T1 to Tk are each programming segments in C + + programming language which when invoked will performed the desired modification in a document instance. Such translator information is derived based on the semantics of operator O, its associated arguments, and the input DTD. Construction of the instance translator is thus a matter of combining the created programming segments and compiling them. It should be noted that it would be apparent to one of skill in the art to use some other programming language to represent the translator information. Such use of other programming languages would not depart from the spirit and scope of the present invention.

It has been determined that a relatively small set of primitive DTD operators can be used to accomplish most DTD evolution tasks. Since each of these primitive operators is well defined, the generated translator will produce correct instances of the target DTD. The set of primitive DTD operators is listed below:
- (I) Insert:: Introduce new element types or attributes
- (II) Remove:: Remove existing element types and attributes
- (III) Group:: Group a regular expression by a given element type
- (IV) Ungroup, Recursive Ungroup:: Substitute an element type by its content model
- (V) Rename:: Change the name of element types or attributes
- (VI) Cut:: Cut an argument or its occurrence from content model
- (VII) PasteBefore, PasteAfter, PasteFirst, PasteLast:: insert an argument into the content model
- (VIII) MoveToFront, MoveToEnd:: Move an argument to the front (or end) of a content model
- (IX) SplitPCDATA:: Substitute a #PCDATA argument by a regular expression.
- (X) Reorder:: Change the order of a list of elements.

Each primitive DTD operator (together with its arguments) defines both a mapping from input DTDs to an output DTD, and a mapping from instances of the input DTD to instances of the output DTD. The first argument of each operator is called a pattern argument and identifies which parts of DTDs and instances will be affected. The remaining arguments specify how those affected parts will be modified. A detailed description of the syntax for the pattern argument and of each of the primitive DTD operators is provided below.

### Pattern Arguments: Syntax and Semantics

As mentioned above, a pattern argument defines which DTD segments and instance segments will be modified by DTD operators.
X1@X2@...@Xk@exp[i]
Primarily, a pattern P takes the form shown above, where
• each Xj (1 < = j < = k, k> = 0) is an element type;
• exp is a regular expression over element types and #PCDATA;
• i is an integer > = -1, and may be omitted when i = 0.

When some element types appear more than once in pattern P, a user can also associate a unique identifier to each occurrence to distinguish them from each other.
EXAMPLE: The last pattern below associates label p to the first occurrence of element type SECT, and label q for the second occurrence of SECT .
(1) TITLE
(2) CHAPTER@SECTION@TITLE
(3) SECTION@(TITLE, PARA +)
(4) p:SECT@q:SECT@TITLE

The semantics of a pattern is defined in terms of both DTDs and SGML instances.

### • Pattern Semantics with respect to DTDs

From the viewpoint of a DTD, when k > = 1 Pattern P matches the following set of exp occurrences in an < !ELEMENT Xk ...> declaration:
- if i >0, pattern P matches the i-th occurrence of exp in the content model of Xk. if i = 0, pattern P matches all occurrences of exp in the content model of Xk. if i < = 0 and exp is an element type, pattern P matches the occurrence of exp in the included element type set of Xk.

When k = = 0, Pattern P matches all exp occurrences that can be matched by some pattern X@P, where X is an element type of the current DTD.

### • Pattern Semantics with respect to DTD instances

From the viewpoint of document instance, when k> = 1, Pattern P matches a set of element lists as defined below:
- if i > = 0 or exp is a composed regular expression (i.e., exp is neither an element type or the keyword #PCDATA), then pattern P matches a sequence of sub-elements (e0,#, e1, ..., #, eq) of an Xk-element x if (e0, e1, ..., eq) is an instance of a matched exp occurrence in Xk's content model, each # only consists of included sub-elements, and (X1, ..., Xk) are corresponding to the type of x's nearest ancestors in a top-down order.
- if i< = 0 and exp is an element type, pattern P matches an exp-element y if the nearest ancestor which allow the inclusion of exp-elements is a Xk-type element say x. x has (X1,..., Xk-1) as the labels of nearest ancestor in a top-down order. y is not fitted in the content model of its parent element's typed.

When k = = 0, pattern P matches all sequences of sub-elements that can be matched by a pattern X@P, where X is an element type in current DTD.

In certain cases, the instance modification needs to be restricted based on attribute values. For that purpose, we extend pattern P by replacing some argument of exp, say Y, by <Y attr1 op1 val1, attri2 op2 val2,...>, where attr is an attribute name of element type Y, val is a string, and op is a relational operator ( =, ! =, <, < =, >, > = ). For convenience, a user may use #DATA as an attribute to denote the content data in an element.

### EXAMPLES:

### (1) < LIST TYPE = NUM >

### (2) FIGURE@<CAPTION #DATA = "A Sea Serpent">

Such an extended pattern matches the same set of regular expressions as when no attributes are associated. In the instance level, however, a list of sub-elements will be matched only if all elements y's corresponding to Y satisfy the conditions:
(val(y,attr1) op1 val1) && (val(y,attri2) op2 val2) && ...
where val(y,attrj) denotes the value of attribute attrj for element y. From now on, we call pattern P a Linear Pattern when exp consists of only one element type or #PCDATA. A pattern is called conditional if it is associated with attributes or its context part has length larger than 1 (i.e., k>1). For example, CHAPTER@SECTION@TITLE
is a conditional pattern since the length of its context part (i.e. CHAPTER@SECTION) is 2. This means that a TITLE of SECTION is matched only if that SECTION is a child of a CHAPTER element.

Each of the primitive operators are now described in greater detail.

### (I) Operator Insert

### SYNTAX

- Insert(<!ELEMENT X ... >);
- Insert(<!ATTLIST X attri ...> [,func]);
where:
1. < !ELEMENT X ... > is a valid element declaration of SGML. If X is an element type of input DTD, then the language expressed by <!ELEMENT X ...> should be larger than the X's element declaration in the input DTD.
2. <!ATTLIST X attri ... > is a valid attribute declaration of SGML, and X is an element type of the input DTD.
3. The optional argument func is an expression in the C + + programming language which might contain <X> and/or some <X ATTR>'s as its arguments, where <X> indicates the current X-element and <X ATTR> the ATTR attribute of the current X-element. Any value of func must be valid for the attri attribute of element type X, according to the declaration of <!ATTLIST X attri ... >. The func argument can not be omitted if (1) the reserved SGML keyword #REQUIRED is included in <!ATTLIST X attri... >, and (2) there exists at least one instance of the input DTD that have some X-elements.

### SEMANTICS

Insert(<!ELEMENT X...>)
   Delete the element declaration of X (if any) from the input DTD. Then, insert the given <!ELEMENT X...> specification into the DTD
Insert(<!ATTLIST X attri ... >, func)
   Delete the declaration of attribute attri of X (if any) from the input DTD, and then insert <!ATTLIST X attri ... > into DTD.

For document instances, we first delete attribute attri (if any) from all X-element. Then, define the value of attribute attri for each element X by function func if specified.

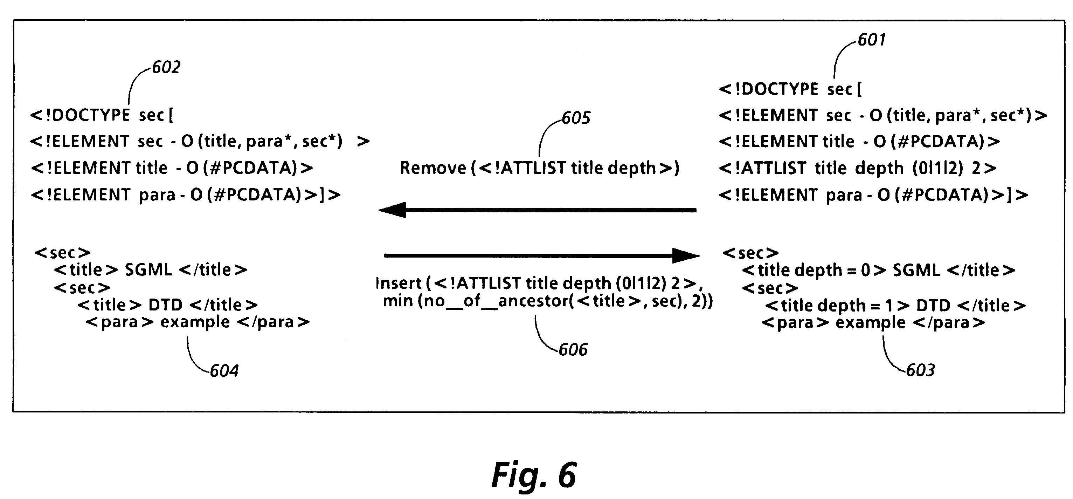

Figure 6 illustrates an example of the effect of the application of the Insert operator. Referring to Figure 6, Insert operator 606 is performed on DTD2 602 resulting in DTD1 601. Similarly, the Insert operator 606 would cause a translator to translate the document instance 2 604 to document instance 1 603. Note that Figure 6 also illustrates the Remove Operator (to perform the inverse operation)and is described below.

### (II) Operator Remove

### SYNTAX

- Remove(spec)
   where, spec takes one of the following forms with X as an existing element type:
   - X
   - <!ATTLIST X attri> ... attri is an attribute of element type X.

### SEMANTICS

- Remove(X) ... remove element X and its attributes from DTD and instances
- Remove(<!ATTLIST X attri>) ... remove attribute attri of element X from both DTD and instances

Figure 6 further illustrates an example of the effect of the application of the Remove operator. Referring to Figure 6, Remove operator 605 is performed on DTD1 601 resulting in DTD2 602. Similarly, the Remove operator 605 would cause a generated translator to translate the document instance 2 603 to document instance 1 604.

### (III) Operator Group

### SYNTAX

- Group(spec, [cnd,]grp)
   where,
   - spec is a pattern argument, say X1@X2@...@exp[i].
   - cnd is an expression in the C + + programming language which might contain some <X>'s or <X ATTR>'s as its arguments, where X is an argument of spec, and ATTR is an attribute of the element type referred by X. <X> indicates an element matched by the argument X of spec, and <X ATTR> indicates the ATTR attribute of such an element. Such an expression is called reference expression from now on. cnd can be omitted if it is NULL.
   - grp takes a form <X A1 = F1, A2 = F2 Aq = Fq > satisfying the following conditions:
      - when X is an element type of input DTD, then
         1. The language defined by X's content model/inclusions/exclusions must be larger than the regular expression exp .
         2. {A1, A2, ..., Aq} are a set of attributes of X whose values need to be defined.
         3. Each Fj(1<=j<=q) is a constant string or a reference expression, whose value is valid for attribute Aj of element type X.
      - when X is not an element type of input DTD, then q must be 0 in the grp argument (i.e., grp = <X>).

### SEMANTICS

For each occurrence of exp matched by pattern spec in input DTD, we replace them
- by (exp|X) if spec is an conditional pattern, or cnd is not NULL,
- or by X otherwise.

If X is not an existing element type, we also introduce X as an element which takes exp as its content model.

For each element list matched by spec in a document instance, if they also satisfy condition cnd, we group them by an element of type X, and assign attributes Ai 's (1 < = i < = q) with value defined by Fi.

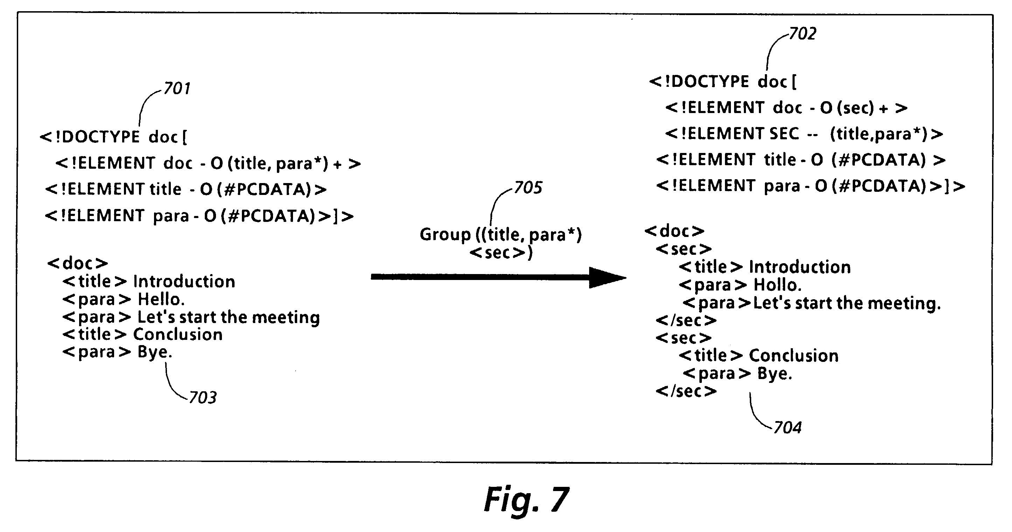

Figure 7 illustrates an example of the effect of the application of the Group operator. Referring to Figure 7, Group operator 705 is performed on DTD3 701 resulting in DTD4 702. Similarly, the Group operator 705 would cause a generated translator to translate the document instance 3 703 to document instance 4 704.

### (IV) Operators Ungroup and RecursiveUngroup

### SYNTAX

- Ungroup(spec [,cnd])
- RecursiveUngroup(spec [, cnd]) where, spec is a definition of a linear pattern, say X1@X2@...@Xk, and cnd is the same as in previous operators.

### SEMANTICS

### Ungroup(spec, cnd)

- When Xk does not have any included or excluded Gls in the input DTD, then
   - For each occurrence of exp matched by pattern spec in input DTD, we replace them by (exp|Mdl) if spec is an conditional pattern or cnd is NOT NULL, or by Mdl otherwise. Here, Mdl is the regular expression representing the language specified by the content model, included Gls and excluded Gls of Xk.
   - For each element matched by spec in a document instance, we substitute the element by its content if the element also satisfies condition cnd.
- When Xk has some included Gls or excluded Gls in the input DTD, then modify the declaration of Xk and Gls that can be reached from Xk in the input DTD accordingly by taking Xk's content model, included and excluded Gls into account.

### RecursiveUngroup(spec, cnd)

- When Xk does not have any included or excluded Gls in the input DTD, then
   - For each occurrence of exp matched by pattern spec in DTD, we replace them by (exp | ExpandedMdl) if spec is an conditional pattern or cnd is NOT NULL, or by ExpandedMdl otherwise. Here, ExpandedMdl is the regular expression obtained from Mdl (as specified in Ungroup operator above) by substitute each occurrence of Xk by Mdl until no more Xk remains.
   - For each element matched by spec in a document instance, if the element satisfies condition cnd, we substitute the element and their included Xk- sub-elements by content.
- When Xk has some included Gls or excluded Gls in the input DTD, then modify the declaration of Xk and Gls that can be reached from Xk in the input DTD accordingly by taking Xk's content model, included and excluded Gls into account.

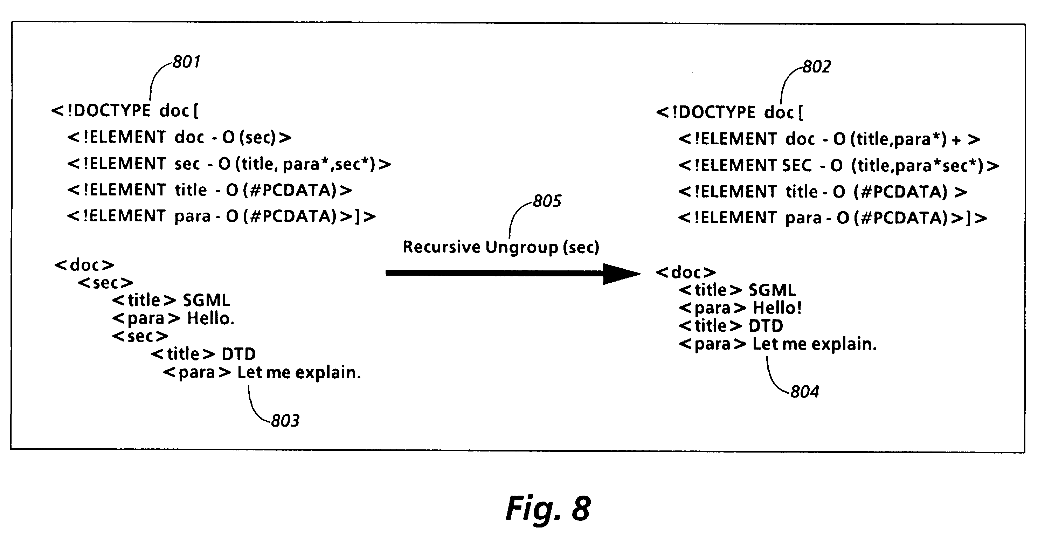

Figure 8 illustrates an example of the effect of the application of the RecursiveUngroup operator. Referring to Figure 8, the RecursiveUngroup operator 805 is performed on DTD5 801 resulting in DTD6 802. Similarly, the RecursiveUngroup operator 805 would cause a generated translator to translate the document instance 5 803 to document instance 6 804.

### (V) Operator Rename

### SYNTAX

- Rename(< !ATTLIST X attri >, new_attri_nm)
- Rename(spec, [cnd,]new_Gl_nm)
- Rename(spec1,[cnd,]func)
   where,
- In the input DTD, X is an element type and attri is an attribute of X. new_attri_nm must not be an attribute of X in the input DTD.
- spec is a linear pattern, say X1@X2@...@Xk.
- cnd is the same as in previous operators.
- new_Gl_nm is a valid element type name. If new_nm is an element type of input DTD, then the language expressed by new_Gl_nm's declaration must be larger than those of Xk's declaration.
- spec1 is a linear pattern in a form X1@X2@...@#PCDATA[i], where [i] can be omitted when i = 0.
- func is a reference expression that return string data as its result.

### SEMANTICS

### Rename(<!ATTLIST X attri >, new_attri_nm)

Change the name of attribute attri of X into new_attri_nm in both DTD and instances.

### Rename(spec, cnd, new__GI__nm)

For each occurrence of exp matched by pattern spec in DTD, we replace them by (exp |new_Gl_nm) if spec is an conditional pattern or cnd is NOT NULL, or by new_Gl_nm otherwise. If new_Gl_nm is not an element type of input DTD, then we introduce new_Gl_nm as an element type into output DTD with the same content model, inclusions/exclusions and attributes as in Xk.

For each element matched by spec in a document instance, if the element also satisfies condition cnd, we change the name of the element into new_nm.

### Rename(spec 1, cnd, func)

For each element matched by spec1 in a document instance, if the element also satisfies condition cnd, we change its content data by the evaluation result of reference expression func.

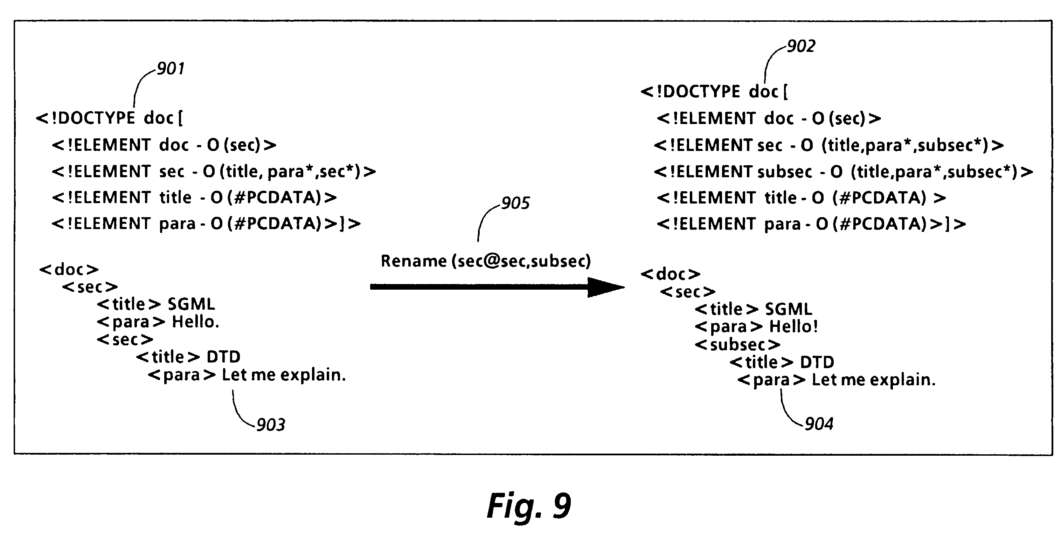

Figure 9 illustrates an example of the effect of the application of the Rename operator. Referring to Figure 9, the Rename operator 905 is performed on DTD7 901 resulting in DTD8 902. Similarly, the Rename operator 905 would cause a generated translator to translate the document instance 7 903 to document instance 8 904.

### (VI) Operator Cut

### SYNTAX

- Cut(spec[,cnd])
where, spec is a linear pattern, and cnd is the same as in previous operators.

### SEMANTICS

For each occurrence of exp matched by pattern spec in DTD, we replace them by (exp?) if spec is an conditional pattern or cnd is NOT NULL, or delete it otherwise.
For each element matched by spec in a document instance, if the element also satisfies condition cnd, we delete the element from document instance.

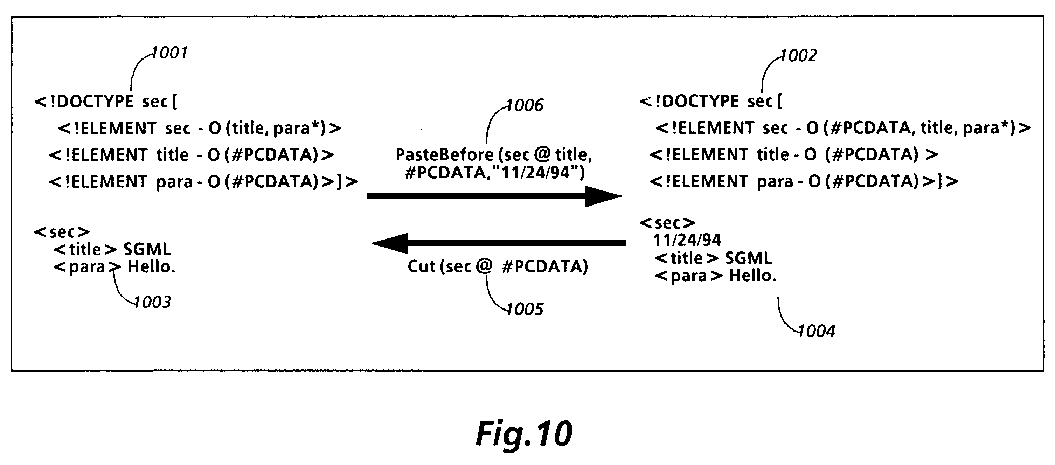

Figure 10 illustrates an example of the effect of the application of the Cut operator. Referring to Figure 10, the Cut operator 1005 is performed on DTD11 1002 resulting in DTD10 1001. Similarly, the Cut operator 1005 would cause a generated translator to translate the document instance 11 1004 to document instance 10 1003. It should be noted that Figure 10 further illustrates an inverse operation, PasteBefore, which is described in greater detail below.

### (VII) Operators PasteBefore, PasteAfter, PasteFirst, PasteLast

### SYNTAX

- PasteFirst(spec, [cnd,] chl, func);
- PasteLast(spec, [cnd,] chl, func);
- PasteBefore(spec, [cnd,] chl, func);
- PasteAfter(spec, [cnd,] chl, func);
where,
1. spec is a linear pattern, say X1@X2@...@Xk,
2. cnd is the same as in previous operators,
3. chl is an existing element type or #PCDATA.
4. func is either a C+ + expression or a reference expression. When func is a constant string, it should be an instance of the element type specified by the child argument.

### SEMANTICS

### PasteFirst(spec, cnd, chl, func)

For each occurrence of exp matched by pattern spec in DTD, at the beginning of Xk's content model, we insert
- chl? if cnd is not NULL or spec is a conditional pattern, or
- chl otherwise.

For each element matched by spec in a document instance, if the element also satisfies condition cnd, we paste a chl-element defined by func as the first child of the element.

### PasteLast(spec, cnd, chl, func)

Change the term "beginning" of PasteFirst(...) into "end ", "first" into "last".

### PasteBefore(spec, cnd, chl, func)

For each occurrence of exp matched by pattern spec in DTD, we paste a
- chl? before exp if cnd is not NULL or spec is a conditional pattern, or
- chl otherwise.

For each element matched by spec in a document instance, if the element also satisfies condition cnd, we paste a chl-element defined by func just before the matched element.

### PasteAfter(spec, [cnd,] chl, func)

Change the term "before" of PasteBefore(...) into "after".

Figure 10 further illustrates an example of the effect of the application of the PasteBefore operator. Referring to Figure 10, the PasteBefore operator 1006 is performed on DTD10 1001 resulting in DTD11 1002. Similarly, the PasteBefore operator 1006 would cause a generated translator to translate the document instance 10 1003 to document instance 11 1004.

### (VIII) Operators MoveToFront and MoveToEnd

### SYNTAX

- MoveToEnd(spec [,cnd]);
- MoveToFront(spec [,cnd]);
where, spec is a linear pattern, and cnd is the same as in the previous operators.

### SEMANTICS

### MoveToEnd(spec, cnd)

For each occurrence of exp matched by pattern spec in DTD, we move them to the end of the content model of Xk if cnd is NULL and spec is not a gets a new content model, say NewMdl. If cnd is not NULL or spec is an conditional pattern, then modify content model of Xk into (Mdl |NewMdl), where Mdl is the current model of Xk.

For each element matched by spec in a document instance, if the element also satisfies condition cnd, we move the element to the end of its parent element.

### MoveToFront(spec, cnd)

The semantics definition of MoveToFront(...) is obtained by substituting the term "end" of MoveToEnd(...) into "front".

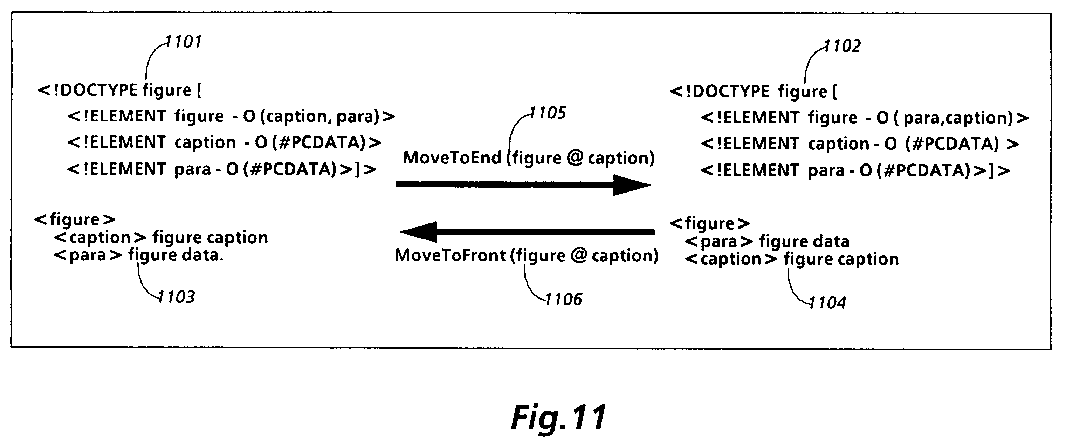

Figure 11 illustrates an example of the effect of the sequential application of the MoveToEnd and the MoveToFront operators. Referring to Figure 11, the MoveToEnd operator 1105 is performed on DTD12 1101 resulting in DTD13 1102. Similarly, the MoveToEnd operator 1105 would cause a generated translator to translate the document instance 12 1103 to document instance 13 1104. In the inverse manner, the MoveToFront Operator 1106 is performed on DTD13 1102 resulting in DTD12 1101. Similarly, the MoveToFront operator 1106 would cause a generated translator to translate the document instance 13 1104 to document instance 12 1103.

### (IX) Operator SplitPCDATA

### SYNTAX

SplitPCDATA(spec, [cnd,] exp, func)
where
(1) spec is a linear pattern definitionin a form X1@...@Xk@#PCDATA[i], where [i] can be omitted if I = 0.
(2) cnd is the same as in previous operators.
(3) exp is a regular expression over element types and #PCDATA.
(4) func is a reference expression whose return values belong to the language defind by exp.

### SEMANTICS

For each occurrence of #PCDATA matched by spec in the input DTD, we substitute it
- by (#PCDATA | exp) if spec is a conditional pattern,or cnd is not NULL, or
- by exp otherwise.

For each argument, say Y, that is not an Gl of the input DTD and Y ! = #PCDATA, we introduce the following declaration into DTD:
<!ELEMENT Y - - (#PCDATA)>

For each element matched by spec in a document instance, if it also satisfies the condition cnd, we replace it by an element sequence as defined by func.

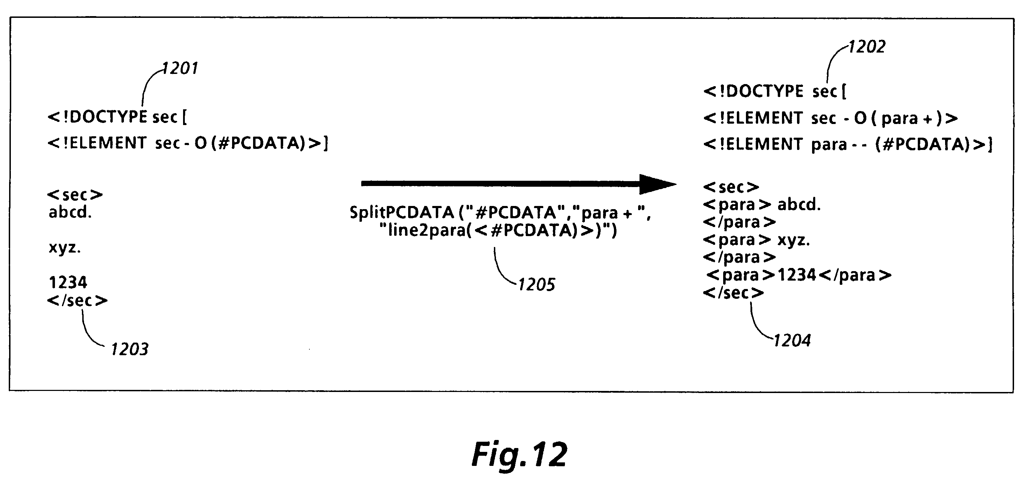

Figure 12 illustrates an example of the effect of the SplitPCDATA operator. Referring to Figure 12, the SplitPCDATA operator 1205 is performed on DTD14 1201 resulting in DTD15 1202. Similarly, the SplitPCDATA operator 1205 would cause a generated translator to translate the document instance 14 1203 to document instance 15 1204.

### (X) Operator Reorder

### SYNATX

Reorder(spec, [cnd,] func)
where
(1) spec is a linear pattern definitionin.
(2) cnd is the same as in previous operators.
(3) func is a reference expression of a type in which less-than (<) and equal-to (=) relationships are defined.

### SEMANTICS

Let spec = X1@X2@...@Xk[i]. For a list of Xk elements (y1,...,yk) in a document instance that
- each is matched by spec,
- each satisfies the condition cnd, and
- all of them are children of a common element, the order of elements are changed to obtain a new list, say (z1,...,zk), such that func(z1) < = func(z2) < = ... < = func(zk).

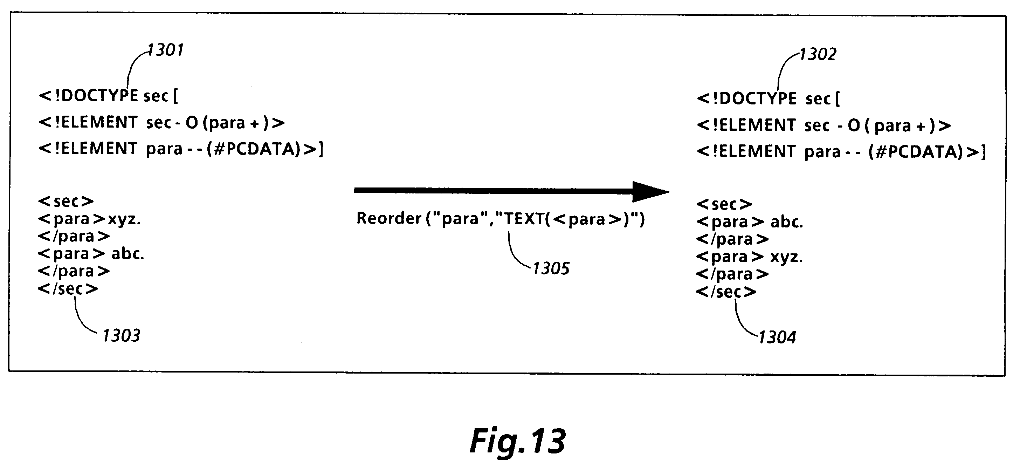

Figure 13 illustrates an example of the effect of the Reorder operator. Referring to Figure 13, the Reorder operator 1305 is performed on DTD16 1301 resulting in DTD17 1302. Similarly, the Reorder operator 1305 would cause a generated translator to translate the document instance 16 1303 to document instance 17 1304.

### Programming/User Interface

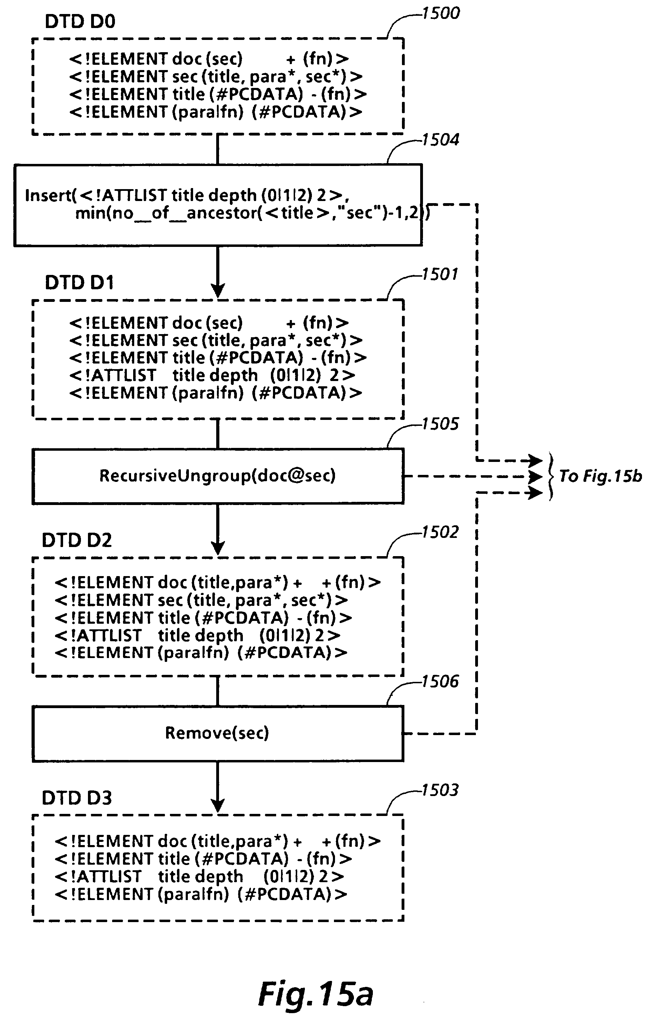

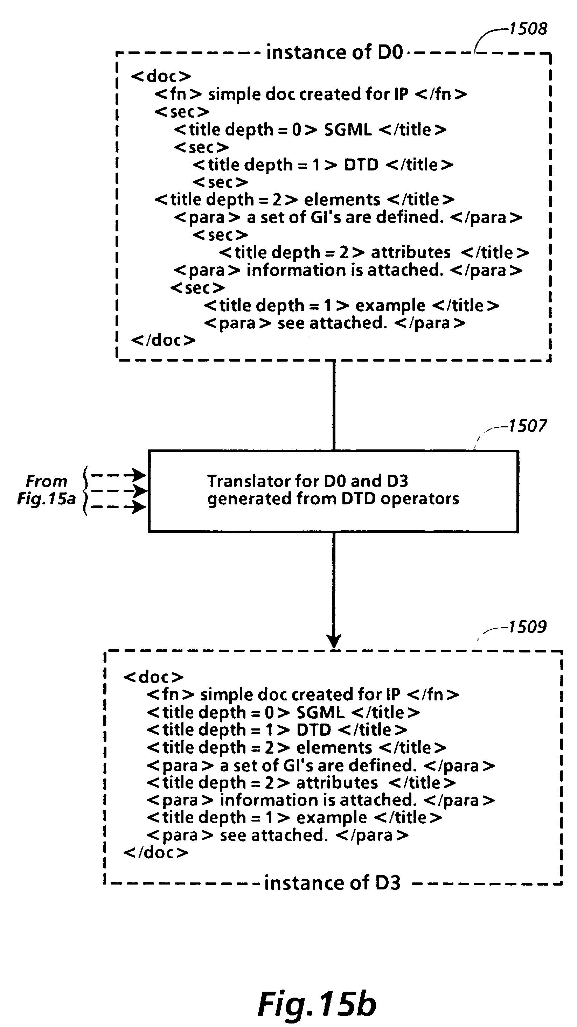

The currently preferred embodiment of the present invention, may be invoked by either a sequence of DTD operators which are specified by a C/C + + function called DTD2DTD (), an example of which is provided below with respect to the Example of Figure 15, or via a graphical user interface.

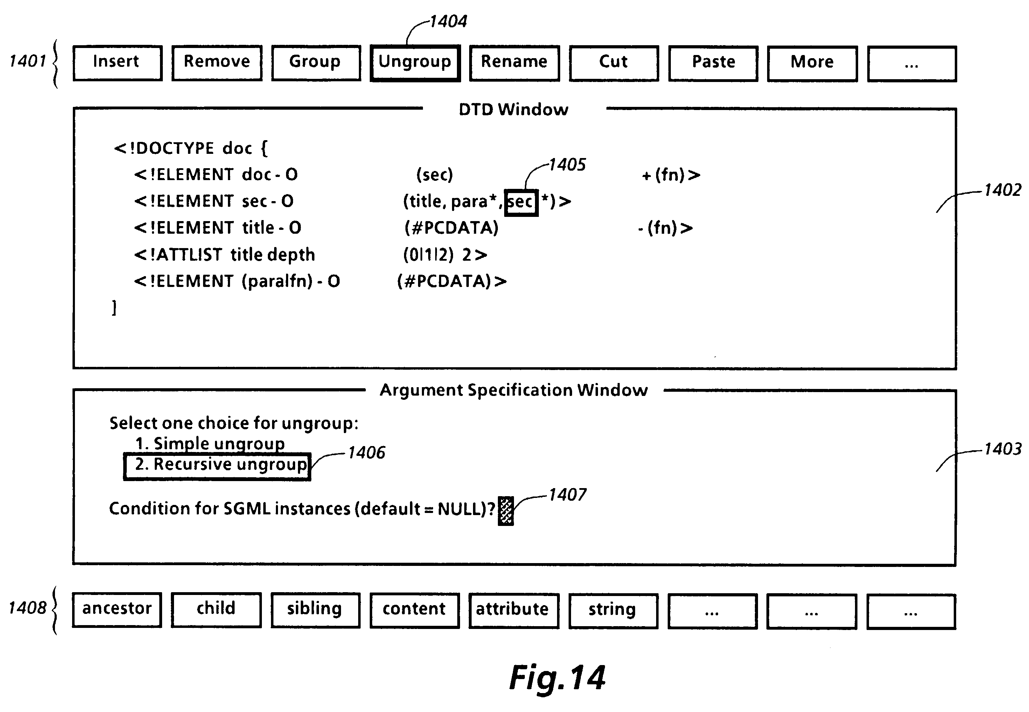

A graphic user interface for the currently preferred embodiment is illustrated in Figure 14. Such an interface will enable end-users (non-programmers) to use our technology for DTD evolution and translator construction. A row of buttons 1401 is positioned at the top of the window. Each button represents a primitive DTD operator or some related operators. A DTD window 1402 displays the DTD being modified. Through well known scrolling techniques, a user may scroll the contents of the DTD in the DTD window 1402. Through well known selection techniques, a portion of the DTD to be operated on is selected. An Argument Specification Window 1403 enables a user to specify argument for a selected operator. In Figure 14, a user has selected the Ungroup button 1404 for operation on the sec argument selected within the content model of sec 1405.

This means that the user wants to ungroup the sections that are included in another section. In the Argument Specification Window 1403, the user specifies additional information for the operator. For the selected Ungroup operation, the system asks the user to decide whether to perform simple ungroup of sections or recursive ungroup 1406 and to provide condition (if any) with respect to SGML instances 1407. A bottom row of buttons 1408 enables a user to specify such conditions based on document structures, content data and/or attribute values. From such information, the DTD will be modified. A user may then repeat this for each desired modification to the DTD. When a user completes the DTD modification, the system will automatically generates an instance translator from the original DTD to the end modified DTD.

### Detailed Example

Figure 15 illustrates a more detailed example of how a DTD D0 1500 can be evolved into a DTD D3 1503. In this example, a user first applies a primitive DTD operator Insert 1504 to introduce an attribute depth into Gl title . The attribute value of depth can be either 0, 1, or 2, and its default value is 2. The last argument of Insert defines how the value of each title element should be defined within document instances. This results in the creation of DTD D1 1501. The DTD D1 1501 is input to the next primitive operator RecursiveUngroup 1505 to substitute each sec element by its content and resulting in the creation of DTD D2 1502. Finally, DTD D2 1502 is input to an operator Remove 1506 which is applied to delete element type sec . From these operators, the system generates a translator 1507 that transforms any instance of D0 1508 into an instance of D3 1509.

A function call to invoke the sequences of processes illustrated in Figure 15 is as follows:

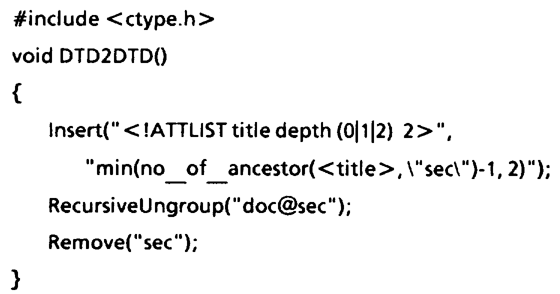

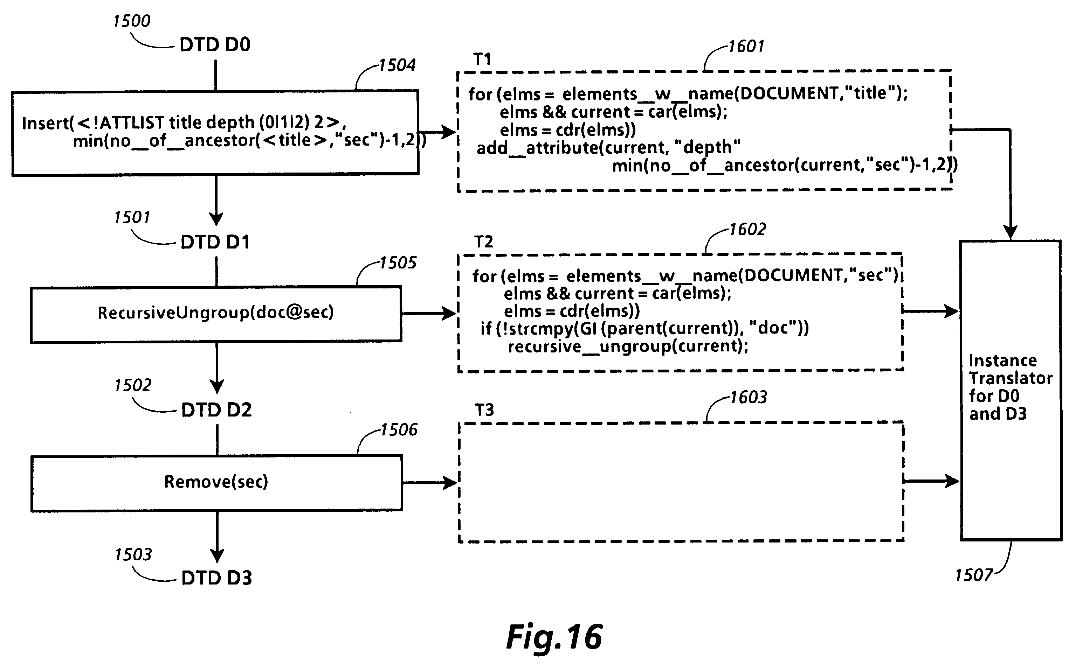

Generation of the instance translator 1507 is further illustrated with respect to Figure 16. In the currently preferred embodiment translator information is generated and stored as C + + statements. The translator information is effectively a collection C + + source program segments which are combined. The C + + programs segments are subsequently compiled to generate the resulting executable instance translator. Referring to Figure 16 Translator information T1 1601 is generated from the Insert operator 1504. Insert Operator T1 indicates that for each "title" element in a DTD D0 1500 instance a "depth" attribute will be added whose value is defined by "(no_of_ancestor(current, "sec")-1, 2)". Note that the above expression is derived from the second argument of the Insert operator through substituting its reference expression "<title>" into a C + + expression "current".

The translator information T2 1602, generated from the RecursiveUngroup operator 1505 indicates that a "sec" element X in a instance of DTD D1 1501 will be recursively replaced by its non-"sec" subelements if X is a child of a "doc" element. Note that such a condition is derived from the operator's argument "doc@sec".

Finally, since DTD D2 1502 (refer to Figure 15) indicates that none of its instances contain a "sec" element, no translation is necessary between DTD D2 1502 and DTD D3 1503. Translator information T3 is thus empty. From these information T1, T2 and T3, an instance translator 1507 is automatically constructed for DTD D0 and D3.

## Claims

1. A system for modifying an original data format to a modified data format and creating a translator of instances of documents in said original format to instances of documents in said modified data format, said system comprising:
a plurality of modification operators for modifying data formats, each of said modification operators specifying a desired modification to an original data format;
means for specifying one or more modification operators from said plurality of editing operations to be performed on a data format;
input means for receiving an original data format;
a processing means coupled to said input means and said means for specifying one or more modification operators, said processing means for performing said modification operators on said original format to create a modified data format and instance translation information, said processing means further comprising a translator generation means for creating an instance translator from said document translation information.

2. A system as claimed in Claim 1, wherein said original document format and said modified document format are both specified according to the Standard Generalized Markup Language standard and wherein each of said plurality of modification operators is comprised of:
an operation identifier;
a pattern argument for identifying format elements and corresponding document instance elements to be modified; and
one or more modifier arguments for specifying how said pattern argument will be modified.

3. A system as claimed in Claim 1 or Claim 2, further comprising a display means and wherein said means for specifying one or more modification operators is further comprised of a graphical user interface displayed on said display means, said graphical user interface comprising a first area for specifying a desired operation, a second area for displaying a data format to be modified, and a third area specifying operator parameters.

4. A method for constructing instance translators of a document instance in a first format to a document instance in a second format, said method comprising the steps of:
a) specifying one or more format modification operators from a set of modification operators, each of said operators in said set of modification operators representing a manner in which said format is to be modified;
b) applying said specified modification operators to said first format to create an intermediate format;
c) concurrent with step b) generating and storing instance translation information;
d) repeating steps a)-c) on said intermediate format until said second format is achieved;
e) generating said instance translator from said generated instance translation information.

5. A method as claimed in Claim 4, wherein said step of concurrent with step b) generating instance translation information is further comprised of the step of generating statements in a programming language for performing the specified modification on a document instance.

6. A method as claimed in Claim 5, wherein said step of generating said instance translator from said generated instance translation information is further comprised of the step of collecting generated programming language statements and compiling.

7. A method as recited in Claim 6, wherein said programming language is the C+ + programming language.

8. A system for evolution of document formats specified in a Document Type Definition (DTD) of the Standard Generalized Markup Language (SGML), said system comprising:
a set of predefined DTD modification operators, each of said DTD modification operators indicating a modification to a DTD and a corresponding modification to an element in a document instance of said DTD;
a DTD input means for receiving an original DTD;
means for indicating one or more DTD modification operators to be performed on said original DTD and intermediate DTDs thereof, to create a desired DTD; and
a modification processing means coupled to said input means for performing DTD modification operators on said original DTD and intermediate DTDs thereof, said processing means further comprising means for generating translation information upon performing a DTD modification operator upon said original DTD or intermediate DTDs thereof and translator construction means for constructing an instance translator from said translation information; and
a storage means for storing constructed instance translators.

9. A system as claimed in Claim 8, further comprising:
a document instance input means for receiving a document instance of said original DTD;
a translation processing means coupled to said document instance input means and said storage means, said translation processing means for executing an instance translator to translate said document instance of said original DTD to a document instance of said desired DTD.

10. A system as recited in Claim 9, wherein each of said set of predefined DTD modification operators is further comprised of a pattern argument for specifying DTD segments and instance segments to be modified by said corresponding operator, and one or more modification arguments for specifying modification data to be used during the modification; and optionally wherein one of said set of predefined DTD modification operators is an Insert operator to introduce new elements types or attributes into said original DTD or intermediate DTDs thereof; and/or wherein another of said set of predefined DTD modification operators is a Remove operator for removing existing element types and attributes from said original DTD or intermediate DTDs thereof; and/or wherein another of said set of predefined DTD modification operators is a Group operator for grouping a regular expression by a given element type in said original DTD or intermediate DTDs thereof; and/or wherein another of said set of predefined DTD modification operators is a UnGroup operator for substituting an element type by its content model in said original DTD or intermediate DTDs thereof; and/or wherein another of said set of predefined DTD modification operators is a Rename operator for changing the name of element types or attributes in said original DTD or intermediate DTDs thereof; and/or wherein another of said set of predefined DTD modification operators is a Cut operator for cutting an argument or its occurrence from a content model of a segment of said original DTD or intermediate DTDs thereof; and/or wherein another of said set of predefined DTD modification operators is a Paste operator for inserting an argument into a content model of a segment of said original DTD or intermediate DTDs thereof; and/or wherein another of said set of predefined DTD modification operators is a Move operator for moving an argument within a content model of a segment of said original DTD or intermediate DTDs thereof; and/or wherein another of said set of predefined DTD modification operators is a Split operator for substituting a #PCDATA argument by a regular expression in said original DTD or intermediate DTDs thereof; and/or wherein another of said set of predefined DTD modification operators is a Reorder operator for changing the order of a list of elements in said original DTD or intermediate DTDs thereof.
